# EUROPEAN PATENT APPLICATION

(11) **EP 4 661 509 A1**
(43) Date of publication of application: **10.12.2025**
(21) Application number: 23919040.8
(22) Date of filing: 01.02.2023
(51) Int. Cl.: H04W 52/02

(54) **RADIO RESOURCE MANAGEMENT (RRM) MEASUREMENT METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: HU, Ziquan, Beijing 100085 (CN); LI, Yanhua, Beijing 100085 (CN)
(74) Representative: Dehns Germany Partnerschaft mbB
(86) International application number: PCT/CN2023/074156
(87) International publication number: WO 2024/159462

(57) **Abstract**

Provided in the embodiments of the present disclosure are an RRM measurement method and apparatus, and a communication device and a storage medium. The RRM measurement method may comprise: in response to an extended discontinuous reception (eDRX) cycle being greater than or equal to a first threshold value and/or a discontinuous reception (DRX) cycle being less than or equal to a second threshold value, executing RRM measurement relaxation.

## Description

### TECHNICAL FIELD

The present disclosure relates to, but is not limited to the technical field of wireless communication, and in particular, to a radio resource management (RRM) measurement method and apparatus, a communication device, and a storage medium.

### BACKGROUND

In order to balance low power consumption and services with certain latency requirements, a terminal, also referred to as a user equipment (UE), introduces an extended discontinuous reception (eDRX) mechanism. After the terminal enters the eDRX mechanism, the terminal may wake up and sleep within the eDRX cycle.

If the eDRX cycle is long enough, there is a paging time window (PTW) within each eDRX cycle. The terminal wakes up and sleeps according to the discontinuous reception (DRX) cycle(s) in the PTW, and monitors the paging channel when awake to receive downlink data. The terminal remains in a dormant state for the rest of the time. If the eDRX cycle is short, no PTW is configured for the eDRX cycle, and the network device may assume that the terminal does not sleep, that is, the terminal is always accessible.

### SUMMARY

Embodiments of the present disclosure provide an RRM measurement method and apparatus, a communication device, and a storage medium.

A first aspect of the present disclosure provides a radio resource management (RRM) measurement method, where the method is performed by a terminal and includes:
in response to an eDRX cycle being longer than or equal to a first threshold, and/or a DRX cycle being shorter than or equal to a second threshold, performing RRM measurement relaxation.

A second aspect of the present disclosure provides a radio resource management (RRM) measurement apparatus, where the apparatus includes:

an execution module, configured to perform RRM measurement relaxation in response to an eDRX cycle being longer than or equal to a first value, and/or a DRX cycle being shorter than or equal to a second value.

A third aspect of the present disclosure provides a communication device, including a processor, a transceiver, a memory, and an executable program stored in the memory and capable of being run by the processor, where the processor, when running the executable program, executes the RRM measurement method provided in the first aspect.

A fourth aspect of the present disclosure provides a computer storage medium, where the computer storage medium stores an executable program; where the executable program, when executed by a processor, is capable of implementing the RRM measurement method provided in the first aspect.

In the technical solutions provided by the embodiments of the present disclosure, the RRM measurement relaxation is performed in response to the eDRX cycle being longer than or equal to the first value, and/or the shorter DRX cycle being shorter than or equal to the second value. This considers that the configuration of a larger eDRX cycle and DRX is intended to balance terminal accessibility and power consumption saving. If the RRM measurements are continuously performed across the entire time domain, the terminal actually cannot sleep well during the sleep period corresponding to the eDRX cycle. Therefore, by relaxing the RRM measurements, unnecessary RRM measurements of the terminal can be reduced, thereby further saving the power consumption of the terminal.

It should be understood that the foregoing general description and the following detailed description are exemplary and explanatory only, and do not limit the present disclosure.

### BRIEF DESCRIPTION OF THE DRAWINGS

The accompanying drawings herein, which are incorporated in and constitute a part of the specification, illustrate embodiments consistent with the present disclosure and are used in conjunction with the specification to explain principles of the present disclosure.
FIG. 1A is a schematic structural diagram of a wireless communication system shown according to an exemplary embodiment;
FIG. 1B is a schematic diagram of a relationship among an eDRX cycle, a DRX cycle, and a PTW shown according to an exemplary embodiment;
FIG. 1C is a schematic diagram of a configuration of an eDRX parameter of a UE shown according to an exemplary embodiment;
FIG. 1D is a schematic diagram of a configuration of an eDRX parameter of a terminal shown according to an exemplary embodiment;
FIG. 1E is a schematic diagram of the relationship between a PTW in an idle state of the terminal and a PTW in an inactive state of the terminal in the time domain shown according to an exemplary embodiment;
FIG. 2A is a schematic flow chart of an RRM measurement method shown according to an exemplary embodiment;
FIG. 2B is a schematic flow chart of an RRM measurement method shown according to an exemplary embodiment;
FIG. 2C is a schematic flow chart of an RRM measurement method shown according to an exemplary embodiment;
FIG. 2D is a schematic flow chart of an RRM measurement method shown according to an exemplary embodiment;
FIG. 2E is a schematic flow chart of an RRM measurement method shown according to an exemplary embodiment;
FIG. 2F is a schematic flow chart of an RRM measurement method shown according to an exemplary embodiment;
FIG. 3 is a schematic structural diagram of an RRM measurement apparatus shown according to an exemplary embodiment; and
FIG. 4 is a schematic structural diagram of a terminal shown according to an exemplary embodiment.

### DETAILED DESCRIPTION

Exemplary embodiments are described in detail herein, examples of which are represented in the accompanying drawings. When the following description relates to the drawings, the same numerals in different accompanying drawings represent the same or similar elements unless otherwise indicated. The implementations described in the following exemplary embodiments do not represent all implementations consistent with the embodiments of the present disclosure. To the contrary, they are merely examples of apparatuses and methods that are consistent with some aspects of the embodiments of the present disclosure.

Terms used in the embodiments of the present disclosure are used solely for the purpose of describing certain embodiments and are not intended to limit the embodiments of the present disclosure. The singular forms of "a/an", "said" and "the" used in the embodiments of the present disclosure are also intended to include plural forms unless the context clearly indicates other meanings. It should also be understood that the term "and/or" used herein refers to and includes any or all possible combinations of one or more associated listed items.

It should be understood that although the terms "first", "second", "third", etc. may be used to describe various information in the embodiments of the present disclosure, and such information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "when..." or "while..." or "in response to determination".

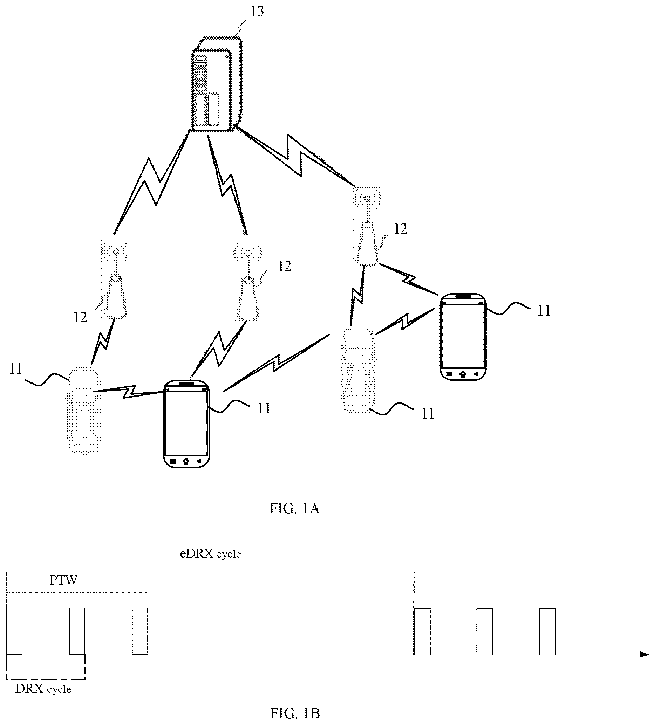

Referring to FIG. 1A, a schematic structural diagram of a wireless communication system provided by an embodiment of the present disclosure is illustrated. As shown in FIG. 1A, the wireless communication system is a communication system based on cellular mobile communication technology, and the wireless communication system may include: a plurality of UE 11 and a plurality of access devices 12. In some embodiments, the communication system may further include one or more core network devices, which are not shown in FIG. 1A. The core network devices include but are not limited to an access management function (AMF), a user plane function (UPF), a session management function (SMF) and a policy control function (PCF), and the like.

The UE 11 may refer to a device that provides voice and/or data connectivity to a user. The UE 11 may communicate with one or more core networks via a radio access network (RAN). The UE 11 may be an Internet of Things (IoT) UE, such as a sensor device, a mobile phone (or a cellular phone), and a computer with an IoT UE. For example, it may be a fixed, portable, pocket-sized, handheld, computer-built-in, or vehicle-mounted device. For example, a station (STA), a subscriber unit, a subscriber station, a mobile station, a mobile, a remote station, an access point, a remote terminal, an access terminal, a user terminal, a user agent, a user device, or a user equipment (UE). Alternatively, the UE 11 may also be a device of an unmanned aerial vehicle. Alternatively, the UE 11 may also be a vehicle-mounted device, such as a driving computer with a wireless communication function, or a wireless communication device connected to an external driving computer. Alternatively, the UE 11 may also be a roadside device, for example, a street lamp, a signal lamp or other roadside device with a wireless communication function.

The access device 12 may be a network side device in a wireless communication system. The wireless communication system may be a 4th mobile communication technology (4G) system, also known as a long term evolution (LTE) system; or, the wireless communication system may be a 5G system, also known as a new radio (NR) system or a 5G NR system. Alternatively, the wireless communication system may be a next generation system of the 5G system. The access network in the 5G system may be referred to as a new generation-radio access network (NG-RAN). Alternatively, it may be an MTC system.

The access device 12 may be an evolved access device (eNB) used in a 4G system. Alternatively, the access device 12 may also be an access device (gNB) using a centralized and distributed architecture in a 5G system. When the access device 12 uses the centralized and distributed architecture, it usually includes a central unit (CU) and at least two distributed units (DUs). The central unit is provided with protocol stacks of a packet data convergence protocol (PDCP) layer, a radio link layer control protocol (Radio Link Control, RLC) layer, and a media access control (MAC) layer; and the distributed unit is provided with a protocol stack of a physical (PHY) layer. The specific implementation manner of the access device 12 is not limited by the embodiments of the present disclosure.

A wireless connection may be established between the access device 12 and the UE 11 through a wireless air interface. In different implementations, the wireless air interface is a wireless air interface based on the fourth generation mobile communication network technology (4G) standard; or, the wireless air interface is a wireless air interface based on the fifth generation mobile communication network technology (5G) standard, for example, the wireless air interface is a new air interface; or, the wireless air interface may also be a wireless air interface based on the next generation mobile communication network technology standard of 5G.

In the related art, the eDRX parameters for a terminal in an idle state are negotiated between the terminal and the core network through NAS messages, which are completely transparent to the access device such as a base station.

In New Radio (NR), the inactive state is further introduced. In this case, the UE needs to receive not only paging from the core network but also paging from RAN. In the case of reduced capability (Redcap) terminal, eDRX is also introduced for the inactive state. The eDRX parameters of the inactive state are configured by the RAN, and the eDRX cycle of the inactive state may be different from that of the idle state. For example, the eDRX cycle in the inactive state is shorter than the eDRX cycle in the idle state. The length of the PTW for the inactive state is also configured by the RAN. In one example, the PTW in the inactive state configured by the RAN has the same starting point as the PTW in the idle state, but the length may be different.

Referring to FIG. 1B, it can be seen that a PTW is included within the eDRX cycle. For example, one PTW is included in one eDRX cycle. One PTW includes one or more DRX cycles. The duration of a DRX cycle is shorter than the duration of the eDRX cycle.

For example, when the eDRX cycle is longer than 10.24s, the PTW of the eDRX cycle includes multiple DRXs.

Before the terminal enters the eDRX mechanism, the terminal may interact with the network side through relevant signaling.

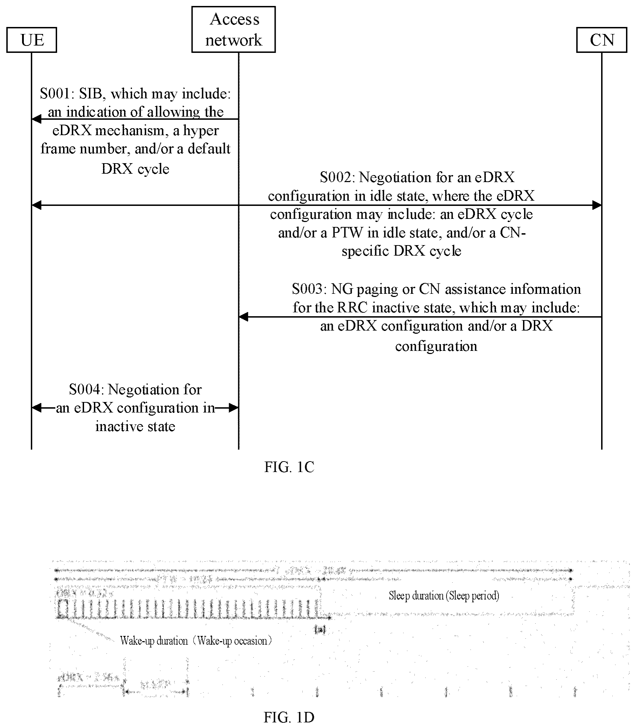

For example, as shown in FIG. 1C, the terminal may perform relevant signaling interactions with the network side, which may include the following.

In S001, the access device sends a system information block (SIB) to the UE, and the SIB includes an indication of allowing the eDRX mechanism, a default DRX cycle and a hyper frame number (hyper system frame number, SFN). After the UE receives the SIB, if the SIB includes the indication that the UE is allowed to use the eDRX mechanism, the UE may determine the hyper frame to start executing the eDRX mechanism according to the hyper frame number. When executing the eDRX mechanism, the UE may monitor paging from CN according to the default DRX cycle according to the negotiation agreement between the UE and the access device. The access device may be various types of access devices as shown in FIG. 1A.

In some cases, the SIB may further include a default DRX cycle. The default DRX cycle may also be referred to as a default paging cycle.

In S002, The UE and the core network (CN) negotiate the eDRX configuration in the idle state, which may include eDRX parameters in the idle state. Specifically, it may include: the UE sending UE-specific DRX parameters and/or preferred DRX parameters (preferable eDRX) when sending an attach request or a tracking area update (TAU) request to the MME.

After receiving the above-mentioned attach request or TAU request, the CN delivers an eDRX configuration to the UE; the eDRX configuration carries the above-mentioned one or more eDRX parameters. The eDRX parameters include one or more of the following: the eDRX cycle and/or time domain starting position and window length of the PTW.

In S003, after completing the eDRX configuration in the idle state and the terminal enters the eDRX mechanism, the CN may send NG paging signaling and CN assistance information for the RRC inactive state to the access network. The NG paging signaling and CN assistance information for the RRC inactive state may include: an eDRX configuration and/or a DRX configuration. The DRX configuration may include the DRX cycle configured by the CN. The CN performs paging according to the eDRX configuration. After receiving the core network (CN) paging sent by the MME, the access device forwards the CN paging to the UE.

eDRX parameters in the idle state are transparently transmitted to the UE through the access device. For example, the core network device such as the mobile management function (mobile management entity, MME) or AMF of the CN transmits the eDRX parameters in the idle state to the UE through the access device. In some embodiments, the MME may be replaced by the core network device of the CN such as AMF. The eDRX parameters in the idle state are negotiated between the UE and the core network through NAS messages, which are completely transparent to the access device.

In S004, the UE and the access device negotiate the eDRX configuration in the inactive state, where the eDRX configuration in the inactive state may include eDRX parameters for the inactive state. Specifically, it may include: the access device and the terminal negotiating the eDRX configuration in the inactive state directly through one or more RRC signaling.

It is worth noting that any two of the following three processes, namely, the negotiation between the UE and the access device for the eDRX configuration in the inactive state, the negotiation between the UE and the CN for the eDRX configuration in the idle state, and the access device sending the indication of allowing the eDRX mechanism, the default DRX cycle and the hyper frame number (hyper system frame number, SFN) through the SIB, may be independent of each other or performed in a single process. For example, in a single process, the network-side devices such as the CN and/or the access device may separately perform S001, S002 to S003, or separately perform S004 with the UE. In other embodiments, the network-side devices such as the CN and/or the access device may perform S001 to S004 simultaneously.

If the terminal is in an inactive state, the UE needs to receive paging not only from the core network but also from the RAN. The eDRX parameters in the inactive state may include: the eDRX cycle in the inactive state and/or the time domain starting position and/or window length (i.e., time length) of the PTW in the inactive state.

The eDRX may also be introduced for the inactive state, and the eDRX parameters in the inactive state are configured by the RAN, and the eDRX cycle in the inactive state and the eDRX cycle in the idle state are likely to be different.

For example, the eDRX cycle in the inactive state is shorter than the eDRX cycle in the idle state; and the length of the PTW in the inactive state is also configured by the RAN, and the PTW configured by the RAN and the PTW in the idle state have the same starting point, but may have different lengths.

In some cases, when the eDRX cycle is long enough, a PTW is set within the eDRX cycle, and the terminal periodically switches between the wake-up state and the sleep state according to the DRX cycle within the PTW.

The eDRX cycle may include: a sleep duration or sleep period, and a wake-up duration or wake-up occasions. If the eDRX cycle is long enough, the wake-up period is the PTW. For example, if the eDRX cycle is longer than or equal to threshold 1, which may be 20.48s, then PTW is configured in the eDRX cycle, otherwise the PTW is not configured in the eDRX cycle. If a PTW is configured within the eDRX cycle, the terminal may wake up and sleep according to the DRX cycle within the PTW, and sleep outside the PTW. If no PTW is configured within the eDRX cycle, the terminal sleeps and wakes up according to the eDRX cycle, performing a single switch between wake-up and sleep within one eDRX cycle.

The eDRX cycle is longer than or equal to threshold 1 (e.g., 20.48s), a PTW needs to be configured, and the terminal wakes up and sleeps according to the DRX cycle within the PTW, and sleeps outside the PTW of the eDRX cycle. As shown in (a) of FIG. 1D, a PTW equal to 10.24s is set within the eDRX cycle equal to 20.48s, and the terminal wakes up or sleeps according to the DRX cycle equal to 0.32 within the PTW. In this way, within a duration of 20.48s, the terminal may switch between the wake-up and sleep states 32 times.

The DRX cycle is shorter than threshold 1 (e.g., 20.48s), no PTW is configured, and the terminal wakes up and sleeps according to the eDRX cycle, and switches between the wake-up state and the sleep state once in one eDRX cycle. As shown in (b) of FIG. 1D, within a duration of 20.48s, the terminal switches between the wake-up state and the sleep state 8 times according to the eDRX cycle equal to 2.56s.

Comparing (a) of FIG.1D with (b) of FIG. 1D, it can be seen that within 20.48s, the number of switches between the wake-up state and the sleep state directly according to the eDRX cycle of 2.56s is shorter than that of switches between the wake-up state and the sleep state according to the DRX cycle of 0.32s within the PTW. The more times the terminal switches between the wake-up state and the sleep state according to the DRX cycle of 0.32s, the greater the power consumption of the terminal. This obviously runs counter to the purpose of setting a longer eDRX cycle to reduce the number of terminal wake-ups to further save terminal power consumption. It can be seen that when the eDRX cycle is long enough and/or the DRX cycle is relatively short, compared with a shorter eDRX cycle, the terminal wakes up more frequently. As a result, setting a larger eDRX cycle, which is intended to achieve more power savings, actually has the opposite effect.

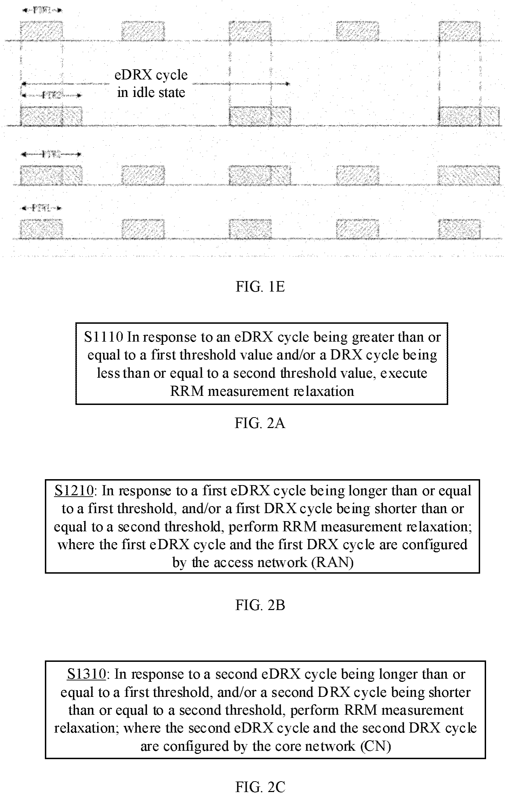

In view of this, as shown in FIG. 2A, an embodiment of the present disclosure provides a radio resource management (RRM) measurement method, which is performed by a terminal and includes the following.

In S1110, in response to an eDRX cycle being longer than or equal to a first threshold, and/or a DRX cycle being shorter than or equal to a second threshold, an RRM measurement relaxation is performed.

The terminal may be various terminals that support the eDRX mechanism. The terminal may also be referred to as a UE. For example, the terminal may be various mobile phones, tablet computers, wearable devices, smart home devices, smart office devices, vehicle-mounted devices, industrial devices, etc. In another example, the terminal may be a reduced capability (RedCap) terminal, and the like.

In this case, the terminal may be in a non-connected state, which may include: an RRC inactive state and/or an RRC idle state. The RRC inactive state may also be referred to as the inactive state for short. The RRC idle state may be referred to as the idle state for short.

If the terminal supports the eDRX mechanism in the inactive state, the eDRX parameters for the terminal in the inactive state are configured by the radio access network (RAN). Specifically, they are configured by the access device of the RAN. In the embodiments of the present disclosure, the eDRX parameters that can be configured by the RAN may be referred to as first eDRX parameters. The first eDRX parameters may be used to configure an eDRX cycle (i.e., the first eDRX cycle). Optionally, the RAN may also configure a DRX cycle (i.e., the first DRX cycle).

If the terminal supports the eDRX mechanism in the idle state, the terminal may receive eDRX parameters configured by the CN (i.e., eDRX parameters in the idle state). In the embodiments of the present disclosure, the eDRX parameters configured by the CN are referred to as second eDRX parameters, which may be used to configure an eDRX cycle (i.e., the second eDRX cycle). The CN may also configure a DRX cycle (i.e., the second DRX cycle).

The aforementioned eDRX cycle used for comparison with the first threshold may be the first eDRX cycle or the second eDRX cycle. The aforementioned DRX cycle used for comparison with the second threshold may be the first DRX cycle, the second DRX cycle, or the default paging cycle. For example, the DRX cycle may be any one of the first DRX cycle, the second DRX cycle, and the default paging cycle, or the shorter one of any two of the above or the shortest one of the three.

The first DRX cycle may also be referred to as a RAN paging cycle or a RAN DRX cycle. The second DRX cycle may be referred to as a CN-specific paging cycle or a CN-specific DRX cycle.

In the embodiments of the present disclosure, the DRX cycle compared with the second threshold may be represented by T.

In summary, the aforementioned DRX cycle used for comparison with the second threshold may be: a reference cycle for calculating a detection, measurement and/or evaluation cycle of the RRM measurement.

After the DRX cycle is determined, periodic wake-ups may occur according to the DRX cycle during the wake-up period in the eDRX cycle. The wake-up period may be the first 1/2 of the eDRX cycle. When a PTW is configured within the eDRX cycle, the wake-up period may also be within the PTW.

For example, the first eDRX parameters may be used to configure at least one of the following:
a first eDRX cycle; and
a first PTW.

In some embodiments, the eDRX mechanism in the inactive state also involves the first DRX cycle. The network device may deliver the first DRX cycle to the UE together with the first eDRX parameters, or the first DRX cycle may be delivered to the UE independently of the first eDRX parameters.

If the first eDRX cycle is sufficiently long, a first PTW is configured within the first eDRX cycle. During the first PTW, the terminal may exit the low-power dormant state and monitor for RAN paging. If the first PTW is configured within the first eDRX cycle, the terminal may periodically wake up and sleep within the first PTW according to the first DRX cycle, that is, wake up periodically, and monitor for RAN paging when awake.

Typically, the length of the first DRX cycle may be much shorter than the first eDRX cycle. The length of the first PTW may be an integer multiple of the first DRX cycle.

If the first eDRX cycle is sufficiently long, no first PTW is configured in the first eDRX cycle, and the first eDRX parameters may not configure the first PTW.

Taking the case that the terminal is in the inactive state as an example, if the first eDRX cycle is longer than or equal to 20.48s, under normal circumstances, eDRX cycles corresponding to various eDRX mechanisms are integer multiples of 0.32s. In this case, the first eDRX cycle is longer than 10.24s. It can be considered that the first eDRX cycle is long enough, and the first PTW is configured within the first eDRX cycle. If the terminal switches between the dormant state and the wake-up state according to T within the first PTW, the switching frequency may be higher than that when switching between the dormant state and the wake-up state according to the first eDRX cycle shorter than the first threshold, which instead leads to greater power consumption of the terminal. Moreover, if the RRM measurement is still distributed in the entire time domain in this case, the terminal needs to wake up due to RRM measurement outside the first PTW.In view of this, for this situation, when the first eDRX cycle is longer than or equal to the first threshold, the relaxation of RRM measurement is activated. If the relaxation is not performed according to the configuration of RRM measurement, the terminal may be awakened due to RRM measurement outside the PTW, or the RRM measurement in the PTW is too frequent, which leads to a large amount of power consumption of the terminal and shortens the standby time of the terminal. Therefore, in the embodiments of the present disclosure, when the first eDRX cycle is longer than or equal to the first threshold and T is shorter than or equal to the second threshold, RRM measurement relaxation is performed.

If T is short, the terminal may still wake up or sleep frequently according to the periodic wake-up and sleep mode of T within the first PTW.As a result, the frequency of switching between the dormant state and the wake-up state with a shorter T is higher, which may instead cause the terminal to consume more power. In view of this, for this situation, when T is shorter than or equal to the second threshold, the relaxation of the RRM measurement is activated. If the relaxation is not performed according to the configuration of the RRM measurement, the UE power consumption may be increased due to excessively frequent RRM measurements.

For example, the second eDRX parameter may be used to configure at least one of the following:
a second eDRX cycle; and
a second PTW.

In some embodiments, the eDRX mechanism in the idle state also involves a second DRX cycle. The network device may deliver the second DRX cycle to the UE together with the second eDRX parameters, or the second DRX cycle may be delivered to the UE independently of the first eDRX parameters.

If the second eDRX cycle is long enough, a second PTW is configured within the second eDRX cycle. During the second PTW, the terminal may exit the low-power dormant state and monitor paging from the CN. If the second PTW is configured within the second eDRX cycle, the terminal may periodically wake up and sleep within the second PTW according to the second DRX cycle, and monitor paging from CN when awake.

Typically, the length of the second DRX cycle may be much shorter than the second eDRX cycle. The length of the second PTW may be an integer multiple of the second DRX cycle.

If the second eDRX cycle is not long enough, no second PTW is configured in the second eDRX cycle, and the second eDRX parameters may not indicate the second PTW.

Taking the case that the terminal is in the idle state as an example, if the second eDRX cycle is longer than or equal to 20.48s, under normal circumstances, the eDRX cycles corresponding to various eDRX mechanisms are integer multiples of 0.32s. In this case, the second eDRX cycle is longer than 10.24s. It can be considered that the second eDRX cycle is long enough, and the second PTW is configured in the second eDRX cycle. If the terminal switches between the dormant state and the wake-up state according to T within the second PTW, the switching frequency may be higher than that when switching between the dormant state and the wake-up state according to the second eDRX cycle shorter than the first threshold, which instead leads to greater power consumption of the terminal. Moreover, if the RRM measurement is still distributed in the entire time domain in this case, the terminal needs to wake up due to RRM measurement outside the second PTW. In view of this, for this situation, when the second eDRX cycle is longer than or equal to the first threshold, the relaxation of RRM measurement is activated. If the relaxation is not performed according to the configuration of RRM measurement, the terminal may be awakened due to RRM measurement outside the PTW, or the RRM measurement in the PTW is too frequent, which leads to a large amount of power consumption of the terminal and shortens the standby time of the terminal. Therefore, in the embodiments of the present disclosure, when the second eDRX cycle is longer than or equal to the first threshold and T is shorter than or equal to the second threshold, RRM measurement relaxation is performed.

If T is short, the terminal may still wake up or sleep frequently according to the periodic wake-up and sleep mode of T within the second PTW.As a result, the frequency of switching between the dormant state and the wake-up state with a shorter T is higher, which may instead cause the terminal to consume more power. In view of this, for this situation, when T is shorter than or equal to the second threshold, the relaxation of the RRM measurement is activated. If the relaxation is not performed according to the configuration of the RRM measurement, the UE power consumption may be increased due to excessively frequent RRM measurements.

That is, the S1110 may include at least one of the following:
when the first eDRX cycle is longer than or equal to the first threshold, performing RRM measurement relaxation;
when the first DRX cycle is shorter than or equal to the second threshold, performing RRM measurement relaxation;
when the first eDRX cycle is longer than or equal to the first threshold and the first DRX cycle is shorter than or equal to the second threshold, performing RRM measurement relaxation;
when the second eDRX cycle is longer than or equal to the first threshold, performing RRM measurement relaxation;
when the second DRX cycle is shorter than or equal to the second threshold, performing RRM measurement relaxation;
when the second eDRX cycle is longer than or equal to the first threshold and the second DRX cycle is shorter than or equal to the second threshold, performing RRM measurement relaxation.

It is worth noting that the first thresholds corresponding to the first eDRX cycle and the second eDRX cycle may be the same or different. The second thresholds corresponding to the first DRX cycle and the second DRX cycle may be the same or different.

The RRM measurement relaxation performed herein may include at least one of the following:
stopping the RRM measurement for a period of time; and
reducing the cycle(s) related to the RRM measurement.

The cells involved in the RRM measurement here may include the serving cell of the terminal and/or the neighboring cells of the serving cell. The neighboring cells include but are not limited to: intra-frequency neighboring cells, inter-frequency neighboring cells and/or inter-system neighboring cells.

For example, the cycles related to RRM measurement may include:
a detection cycle (Tdetect), used to identify and evaluate neighboring cells;
a measurement cycle (Tmeasure), used for measurements of the serving cell or neighboring cells; and
an evaluation cycle (Tevaluate), used to perform cell evaluation based on the measurement data obtained during the measurement cycle.

For neighboring cells, the terminal needs to detect the neighboring cells to identify the neighboring cells, and then measure the identified neighboring cells based on the measurement cycle. After completing the measurement of the neighboring cells, the terminal needs to evaluate the neighboring cells.

During the measurement period, the terminal may measure the reference signal of the serving cell (synchronization signal and PBCH block, SSB) and/or the reference signal of the neighboring cell to obtain measurement data. The reference signal includes but is not limited to:
a synchronization signal and PBCH block (SSB), where PBCH is the abbreviation of physical broadcast channel;
a channel status information reference signal (CSI-RS).

The measurement data may include but is not limited to:
a value of measured signal; and
a comparison result between the value of measured signal and the corresponding threshold value.

The value of measured signal includes but is not limited to a reference signal received power (RSRP) or a reference signal received quality (RSRQ). When performing RRM measurement relaxation, the relaxation may be applied to measurement and/or evaluation of the serving cell, and/or to at least one of detection, measurement and evaluation of neighboring cells.

In the embodiments of the present disclosure, in order to simplify processing, the relaxed measurement may be implemented by one of the ways of extending various cycles in the RRM measurement.

For example, the RRM measurement relaxation for the serving cell may include:
increasing the detection cycle, the measurement cycle and/or the evaluation cycle according to the scaling factor; and
according to the increased detection cycle, measurement cycle and/or evaluation cycle.

A single RRM measurement for a serving cell may include: measuring the serving cell according to the measurement cycle to obtain measurement data, and performing cell evaluation on the measurement data of one or more measurement cycles according to the evaluation period. The cell evaluation here may involve obtaining the cell quality by eliminating abnormal data from the measurement data, processing the mean and/or variance of the measurement data, etc. The cell quality may be used for cell selection/reselection of the UE.

When the RRM measurement is not relaxed, the RRM measurement is performed in the entire time domain according to the RRM configuration. However, if the relaxation conditions that the eDRX cycle is longer than the first threshold and/or the DRX cycle is shorter than or equal to the second threshold are met, the RRM measurement relaxation is performed.

As shown in FIG. 2B, an embodiment of the present disclosure provides a radio resource management (RRM) measurement method, which is performed by a terminal and includes the following.

In S1210, in response to a first eDRX cycle being longer than or equal to a first threshold, and/or a first DRX cycle being shorter than or equal to a second threshold, RRM measurement relaxation is performed; where the first eDRX cycle and the first DRX cycle are configured by the access network (RAN).

For example, if the terminal is in an inactive state, it means that the terminal needs to execute the eDRX mechanism in the inactive state according to the first eDRX parameter. In this case, the relationship between the first eDRX cycle and the first threshold value, or the relationship between the first DRX cycle and the second threshold value, may also be determined according to the first eDRX parameter to determine whether the conditions for RRM measurement relaxation are met, and if so, RRM measurement relaxation is triggered. In the embodiments of the present disclosure, RRM measurement relaxation may be performed by directly adjusting the RRM measurement configuration, or RRM measurement relaxation may be performed with reference to the first eDRX parameter and/or the second eDRX parameter of the terminal.

As shown in FIG. 1E, PTW1 is the PTW in the inactive state, i.e., the first PTW. PTW2 is the PTW in the idle state, i.e., the second PTW. The first row of FIG. 1E is a schematic diagram of the distribution of PTW1 in the time domain; the second row of FIG. 1E is a schematic diagram of the distribution of PTW2 in the time domain and the overlapping relationship between PTW1 and PTW2.

It can be seen that PTW2 in the idle state eDRX cycle is also longer than PTW1. In this way, PTW1 is divided into two categories, one is PTW1 that overlaps with PTW2, and the other is PTW1 that does not overlap with PTW2.

The third row of FIG. 1E may be an example of PTWs where the RRM measurement is performed after relaxation, that is, the terminal performs RRM measurement in all PTW2 and performs RRM measurement in PTW1s that do not overlap with PTW2.

The fourth row of FIG. 1E may be an example of PTWs where the RRM measurement is performed after relaxation, that is, the terminal may perform RRM measurement in all PTW1s.

If it is necessary to perform RRM measurement in the first PTW and the second PTW at the same time, it may include: performing RRM measurement in PTW1s that do not overlap with PTW2s, and performing RRM measurement in all PTW2s at the same time.

As shown in FIG. 2C, an embodiment of the present disclosure provides a radio resource management (RRM) measurement method, which is performed by a terminal and includes the following.

In S1310, in response to a second eDRX cycle being longer than or equal to a first threshold, and/or a second DRX cycle being shorter than or equal to a second threshold, RRM measurement relaxation is performed; where the second eDRX cycle and the second DRX cycle are configured by the core network (CN).

If the terminal is in the idle state, it means that the terminal needs to execute the eDRX mechanism in the idle state according to the second eDRX parameter. In this case, the terminal may determine the relationship between the second eDRX cycle and the first threshold, and/or the relationship between the second DRX cycle and the second threshold, to determine whether the conditions for RRM measurement relaxation are met. If the conditions for RRM measurement relaxation are met, RRM measurement relaxation is triggered. In the embodiments of the present disclosure, RRM measurement relaxation may be performed by directly adjusting the RRM measurement configuration, or RRM measurement relaxation may be performed with reference to the first eDRX parameter and/or the second eDRX parameter of the terminal.

In this case, the relaxed RRM measurement is performed within the PTW.That is, the method shown in any one of FIG. 2A to FIG. 2C further includes:
performing the RRM measurement within the PTW.

That is, the relaxed RRM measurement is performed within the first PTW; or, the relaxed RRM measurement is performed within the first PTW and the second PTW; or, the relaxed RRM measurement is performed within the second PTW; where the first PTW may be configured by the first eDRX parameter; and the second PTW may be configured by the second eDRX parameter.

That is, the relaxed RRM measurement is not distributed in the entire time domain, but only distributed in the PTW, which may be the first PTW and/or the second PTW. Since the RRM measurement is performed only in the PTW, it means that no RRM measurement is performed outside the PTW, so the RRM measurement relaxation is achieved, that is, unnecessary RRM measurements of the UE are reduced, and the power consumption of the terminal is reduced.

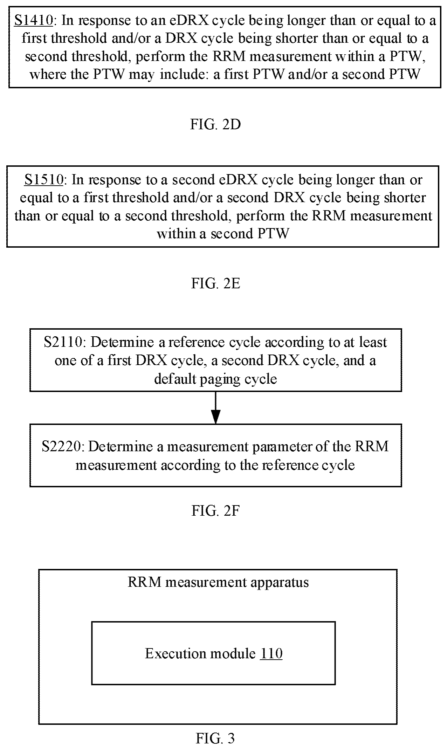

That is, as shown in FIG. 2D, an embodiment of the present disclosure provides an RRM measurement method, which is performed by a terminal. The method includes the following.

In S1410, in response to an eDRX cycle being longer than or equal to a first threshold and/or a DRX cycle being shorter than or equal to a second threshold, the RRM measurement is performed within a PTW, where the PTW may include: a first PTW and/or a second PTW. That is, in this case, RRM measurement is not performed outside the PTW.

If RRM measurement is performed only in the first PTW, since RRM measurement is performed only within the first PTW instead of in the entire time domain, the duration during which the RRM measurement occurs is shortened, which is equivalent to relaxing the RRM measurement, thereby saving the power consumption generated by the UE when performing RRM measurement outside the first PTW.

If RRM measurement is performed only in the second PTW, since RRM measurement is performed only within the second PTW instead of in the entire time domain, the duration during which the RRM measurement occurs is shortened, which is equivalent to relaxing the RRM measurement, thereby saving the power consumption generated by the UE when performing RRM measurement outside the second PTW.

If RRM measurement is performed in the first PTW and the second PTW, since the RRM measurement is only performed within the first PTW and the second PTW instead of in the entire time domain, the duration during which the RRM measurement occurs is shortened, which is equivalent to relaxing the RRM measurement, thereby saving the power consumption generated by the UE when performing RRM measurement outside the first PTW and the second PTW.

Since the first eDRX parameter and the second eDRX parameter need to satisfy a certain correlation, for example, the first eDRX parameter may configure the first eDRX cycle and the first PTW, and the second eDRX parameter may configure the second eDRX cycle and the second PTW. This correlation may be reflected in that, under normal circumstances, the second eDRX cycle is longer than or equal to the first eDRX cycle, and the window length (or duration) of the first PTW is shorter than or equal to the window length (or duration) of the second PTW. In this way, if a certain first PTW and second PTW overlap in the time domain, the time domain starting position of the first PTW needs to be aligned with the time domain starting position of the second PTW that overlaps in the time domain with it. Therefore, in this way, the first PTW may be divided into two categories, one is the first PTW that overlaps with the second PTW, and the other is the first PTW that does not overlap with the second PTW. In the embodiments of the present disclosure, performing relaxed RRM measurement in the first PTW and the second PTW may include: performing relaxed RRM measurement in the first PTW that does not overlap with the second PTW, and performing relaxed RRM measurement in the second PTW.

After the RRM measurement is relaxed, the RRM measurement is performed within the first PTW and the second PTW instead of being performed in the entire time domain, thereby reducing the power consumption generated by the terminal when performing the RRM measurement.

As shown in FIG. 2E, an embodiment of the present disclosure provides an RRM measurement method, which is performed by a terminal. The method includes the following.

In S1510, in response to a second eDRX cycle being longer than or equal to a first threshold and/or a second DRX cycle being shorter than or equal to a second threshold, the RRM measurement is performed within a second PTW. That is, in this case, RRM measurement is not performed outside the second PTW.

For example, if the terminal is in the idle state and the second eDRX cycle is longer than or equal to the first threshold, and/or the second DRX cycle is shorter than or equal to the second threshold, RRM measurement is performed only within the second PTW to achieve relaxation of RRM measurement.

Since the first eDRX parameter and the second eDRX parameter need to satisfy a certain correlation, for example, the first eDRX parameter configures the first PTW, and the second eDRX parameter configures the second PTW. This correlation may be reflected in the fact that the second eDRX cycle may be longer than or equal to the first eDRX cycle, and the window length (or duration) of the first PTW is shorter than or equal to the window length (or duration) of the second PTW. In this way, if a certain first PTW and second PTW overlap in the time domain, the time domain starting position of the first PTW needs to be aligned with the time domain starting position of the second PTW that overlaps in the time domain with it. Therefore, in this way, the first PTW may be divided into two categories, one is the first PTW that overlaps with the second PTW, and the other is the first PTW that does not overlap with the second PTW. In the embodiments of the present disclosure, performing relaxed RRM measurement within the second PTW may include: not performing RRM measurement within the first PTW that does not overlap with the second PTW. That is, the RRM measurement is not only not performed across the entire time domain, but also not performed within each and every first PTW. Instead, the RRM measurement is only performed within part of the first PTWs that overlaps with the second PTW, and within the remaining part of the second PTW of the first PTW that overlaps with this first PTW.

After the RRM measurement is relaxed, the RRM measurement is performed within the second PTW instead of being performed in the entire time domain, thereby reducing the power consumption generated by the terminal when performing the RRM measurement.

In some embodiments, when the RRM measurement is sent, the terminal performs the RRM measurement within one PTW during N eDRX cycles; where N is a positive integer longer than or equal to 2.

That is, the method further includes: performing RRM measurement within one PTW during the N eDRX cycles.

The N eDRX cycles herein may be N first eDRX cycles or N second eDRX cycles.

For example, the threshold value of N may be 2, 3, 4 or 5, etc.

That is, performing the RRM measurement within one PTW during N eDRX cycles may include:
performing the RRM measurement within one first PTW or one second PTW during N first eDRX cycles;
   or,
performing the RRM measurement within one second PTW during N second eDRX cycles.

If the terminal is in the inactive state, RRM measurement is performed within one first PTW or one second PTW during N first eDRX cycles to achieve relaxation of RRM measurement.

If the terminal is in the idle state, RRM measurement is performed within one second PTW during N second eDRX cycles to achieve relaxation of the RRM measurement.

For example, if the terminal is in the inactive state, given that the second eDRX cycle in the idle state is relatively long, and considering that the terminal performs cell selection/reselection in a timely manner when the signal quality of the serving cell decreases, the relaxed RRM measurement may be selected to perform one RRM measurement during N first eDRX cycles.

When the first eDRX cycle is longer than the first threshold, there is one first PTW in one first eDRX cycle. In order to further reduce unnecessary RRM measurements of the terminal and further save power consumption of the terminal, in the embodiments of the present disclosure, the terminal does not perform RRM measurement in the first PTW within each first eDRX cycle or in each second PTW.

In the embodiments of the present disclosure, RRM measurement is no longer performed over the entire time domain, nor is it performed in each first PTW in each first eDRX cycle. Instead, RRM measurement is performed once within one first PTW in one first eDRX or within one second PTW during every N first eDRX cycles, and RRM measurement is stopped at other times. Therefore, relaxation of RRM measurement is achieved, thereby reducing unnecessary RRM measurements of the terminal and reducing power consumption generated by such RRM measurements.

When the RRM measurement is performed once within one first PTW or one second PTW during every N first eDRX cycles, the first PTW in every N first eDRX cycles overlaps with the second PTW, that is, the first PTW in a first eDRX cycle after an interval of N-1 first eDRX cycles overlaps with the second PTW, then RRM measurement is performed in the second PTW.

Then, RRM measurement is performed in the second PTW.If it does not overlap with the second PTW, RRM measurement is performed in the first PTW.In this way, RRM measurement is not performed in part of the first PTWs and part of the second PTWs. In this way, it is equivalent to implementing the transmission of RRM measurement, and the UE does not need to wake up due to RRM measurement outside the first PTW and the second PTW, thereby saving power consumption of the terminal.

If the second eDRX cycle is not shorter than the first threshold and/or the second DRX cycle is not longer than the second threshold, RRM measurement may also be performed in one second PTW during every N second eDRX cycles.

In the case where RRM measurement relaxation is performed but RRM measurement is not completely stopped, as shown in FIG. 2F, an embodiment of the present disclosure provides an information processing method, which may be executed by a terminal, and the method further includes the following.

In S2110, a reference cycle is determined according to at least one of a first DRX cycle, a second DRX cycle, and a default paging cycle;

In S2220, a measurement parameter of the RRM measurement is determined according to the reference cycle.

The reference cycle is used to determine the detection cycle, the measurement cycle and/or the evaluation cycle related to RRM measurement.

It is worth noting that the RRM measurement method shown in FIG. 2F may be implemented in combination with that in any one of the aforementioned FIG. 2A to FIG. 2E. The RRM measurement method shown in FIG. 2F may also be implemented alone.

The reference cycle for performing RRM measurement determined herein is used to further determine the detection cycle, measurement cycle and/or evaluation cycle of the RRM measurement. The detection cycle, measurement cycle and/or evaluation cycle all belong to the aforementioned measurement parameters of the RRM measurement.

Typically, the detection cycle, the measurement cycle and/or the evaluation cycle may be an integer multiple of the reference cycle.

The first DRX cycle may be determined according to the first eDRX parameter, and the second DRX cycle may be determined according to the second eDRX parameter. The default paging cycle may be a default cycle broadcast by a serving cell of the terminal through a system message and used to monitor paging from RAN or paging from CN.

In the embodiments of the present disclosure, when performing RRM measurements, the detection cycle, measurement cycle, and evaluation cycle of RRM measurement are no longer directly determined based on the first DRX cycle in the inactive state. Instead, a reference cycle (T) for RRM measurement is first determined based on one or more of the first DRX cycle, the second DRX cycle, and the default paging cycle, and then the detection cycle, measurement cycle, and/or evaluation cycle of RRM measurement are determined according to this T.

In some embodiments, determining the reference cycle for performing the RRM measurement according to at least one of the first DRX cycle, the second DRX cycle, and the default paging cycle includes:
determining a shorter one of any two of the first DRX cycle, the second DRX cycle and the default paging cycle, or a shortest one of the three, as the reference cycle.

For example, determining the shorter one of any two of the first DRX cycle, the second DRX cycle, and the default paging cycle, or the shortest one of three, as the reference cycle may include the following.

The shorter one of the first DRX cycle and the second DRX cycle is determined as the reference cycle for performing the relaxed RRM measurement within the first PTW. This situation is applicable when the network side does not configure the default paging cycle through the broadcast message or the default paging cycle reception fails, for example, when the terminal enters the current service cell, it happens to miss the broadcast message that configures the default paging cycle. Of course, this is only about determining the reference cycle for RRM measurement without referring to the default paging cycle. This is just an illustrative example, and the specific implementation is not limited to this example.

The shorter one of the first DRX cycle and the default paging cycle is determined as the cycle for performing the relaxed RRM measurement within the first PTW. This situation is applicable to the case where the second eDRX parameter does not configure the second DRX cycle, or the CN does not configure the second eDRX parameter. Of course, this is just an example, and the specific implementation is not limited to this example.

The shorter one of the second DRX cycle and the default paging cycle is determined as the cycle for performing the relaxed RRM measurement in the first PTW.

The shortest one of the first DRX cycle, the second DRX cycle and the default paging cycle is determined as the cycle for performing the relaxed RRM measurement in the first PTW.

In some embodiments, when the relaxed RRM measurement is performed within the first PTW or the second PTW, the method further includes:
determining a reference cycle for performing the RRM measurement in the first PTW and/or the second PTW according to any one of the first DRX cycle, the second DRX cycle and the default paging cycle; where the second DRX cycle is configured by the core network (CN).

For example, determining, according to any one of the first DRX cycle, the second DRX cycle, and the default paging cycle, the reference cycle for performing the RRM measurement in the first PTW or the second PTW may include at least one of the following:
determining the first DRX cycle as a reference cycle;
determining the shorter one of any two of the first DRX cycle, the second DRX cycle and the default paging cycle, or the shortest one of the three, as the reference cycle;
determining the default paging cycle as the reference cycle for performing the RRM measurement in the first PTW; and
determining the shorter one of any two of the first DRX cycle, the second DRX cycle and the default paging cycle, or the shortest one of the three, as the reference cycle.

For example, determining, according to any one of the first DRX cycle, the second DRX cycle, and the default paging cycle, the reference cycle for performing the RRM measurement in the first PTW or the second PTW includes:
determining the shorter one of any two of the first DRX cycle, the second DRX cycle, and the default paging cycle, or the shortest of the three, as the reference cycle for performing the RRM measurement in the first PTW and/or the second PTW.

For example, determining the shorter one of any two of the first DRX cycle, the second DRX cycle, and the default paging cycle, or the shortest of the three, as the reference cycle for performing the relaxed RRM measurement in the first PTW may include one of the following.

The shorter one of the first DRX cycle and the second DRX cycle is determined as the reference cycle for performing the relaxed RRM measurement in the first PTW. This situation is applicable when the network side does not configure the default paging cycle through the broadcast message or the default paging cycle reception fails, for example, when the terminal enters the current service cell, it happens to miss the broadcast message that configures the default paging cycle. Of course, this is only an example of determining the cycle (i.e., the reference cycle) for RRM measurement without referring to the default paging cycle, and the specific implementation is not limited to this example.

The shorter one of the first DRX cycle and the default paging cycle is determined as the reference period for performing the relaxed RRM measurement within the first PTW. This situation is applicable to the case where the second eDRX parameter does not configure the second DRX cycle, or the CN does not configure the second eDRX parameter. Of course, this is just an example, and the specific implementation is not limited to this example.

The shorter one of the second DRX cycle and the default paging cycle is determined as the reference cycle for performing the relaxed RRM measurement in the first PTW.

The shortest one of the first DRX cycle, the second DRX cycle and the default paging cycle is determined as the reference cycle for performing the relaxed RRM measurement in the first PTW.

In an embodiment, for a solution of performing the RRM measurement in the first PTW and the second PTW, the method further includes:
determining a cycle for performing the RRM measurement in the first PTW and the second PTW according to any one of the first DRX cycle, the second DRX cycle and the default paging cycle; where the second DRX cycle is configured by the core network (CN).

The terminal determines the reference cycle (T) for performing RRM measurement by itself according to one or more of the first DRX cycle, the second DRX cycle and the default paging cycle.

For example, determining, according to at least one of the first DRX cycle, the second DRX cycle, and the default paging cycle, the reference cycle for performing the RRM measurement in the first PTW and the second PTW may include:
determining the second DRX cycle as the reference cycle for performing the RRM measurement within the first PTW and the second PTW;
determining the default paging cycle as the reference cycle for performing the RRM measurement within the first PTW and the second PTW;
determining the reference cycle for performing the RRM measurement within the first PTW and the second PTW according to the shorter one of any two of the first DRX cycle, the second DRX cycle, and the default paging cycle, or the shortest one of the three.

In some embodiments, the determining, according to at least one of the first DRX cycle, the second DRX cycle, and the default paging cycle, the reference cycle for performing the RRM measurement in the first PTW and the second PTW further includes:
determining, according to at least one of the first DRX cycle, the second DRX cycle, and the default paging cycle, the reference cycle for performing the RRM measurement in the first PTW;
   and/or,
determining, according to the first DRX cycle and/or the second DRX cycle, the reference cycle for performing the RRM measurement outside the first PTW and within the second PTW;
where the second DRX cycle may be configured by the core network (CN).

If the relaxed RRM measurement is performed within the second PTW and the first PTW that does not overlap with the second PTW, the reference cycles corresponding to the second PTW and the first PTW are the same or different. If the reference cycles are different, the reference cycle for performing the RRM measurement within the first PTW that does not overlap with the second PTW may be determined based on at least one of the first DRX cycle, the second DRX cycle, and the default paging cycle. The specific determination method may refer to the same part of the aforementioned embodiments.

For example, the reference cycle for performing RRM measurement in the second PTW may be determined according to the first DRX cycle and/or the second DRX cycle.

As another example, the first DRX cycle is directly determined as the reference cycle for performing the RRM measurement within the second PTW, or the second DRX cycle is determined as the reference cycle for performing the RRM measurement within the second PTW.

For example, the first threshold is 20.48s; the second threshold is 2.56s.

Furthermore, the first threshold value may be 10.24s, and the second threshold value may also be 0.32s, 0.64s, or 1.28s or other values.

The embodiments of the present disclosure provide an RRM measurement method, which can be used to protect the RRM measurement requirements of terminals in RRC inactive state under eDRX configuration and reduce power consumption caused by unnecessary RRM measurements.

### Mode 1:

For terminals in RRC inactive state, under specific eDRX cycle and DRX cycle conditions, the UE performs relaxed RRM measurement, i.e., performs RRM measurement relaxation. For example, the specific eDRX cycle may be any eDRX cycle in the idle state or eDRX cycle in the inactive state. The DRX cycle may be any DRX cycle with a relatively small threshold.

For UEs in RRC inactive state configured with an eDRX cycle in the inactive state that is longer than 10.24s, the UE in inactive mode performs RRM measurement relaxation, that is, the RRM measurement is limited to the PTW of the eDRX cycle in the inactive state, that is, the eDRX cycle and CN paging cycle in the idle state configured by the CN received by the UE are ignored.

Furthermore, when the UE's RRM measurement is allowed to be relaxed, the measurement within the PTW is performed once over multiple eDRX cycles. For example:

When eDRX=20.48 and DRX=0.32, UE in the inactive mode is allowed to perform measurement within the PTW every two eDRX cycles.

For the inactive mode, if the inactive eDRX cycle is configured to be longer than 10.24s, then a PTW is configured in the inactive eDRX cycle, and the PTW of the inactive state is denoted as PTW1. And UE in the idle mode is configured with an eDRX cycle in idle mode>10.24s. In this case, there is a PTW in the eDRX cycle in idle mode and the PTW is denoted as PTW2. And typically, PTW2>=PTW1. The time for RRM measurement is not limited to the PTW1 window, and the UE performs RRM measurement according to the paging cycle T.

Meanwhile, the UE is allowed to perform relaxed measurements under certain eDRX and DRX configuration scenarios, i.e., perform measurement within a PTW (PTW1 or PTW2) once over multiple eDRX cycles, for example:

When eDRX=20.48s and T=0.32s, UE in inactive mode is allowed to perform measurement within the PTW every two eDRX cycles.

For example, for any requirement in this section, when eDRX=20.48s and DRX=0.32s, UE is allowed to perform one cell evaluation within PTW in every 2 eDRX cycles. (For any requirement in this section, when eDRX=20.48s and DRX=0.32s, UE is allowed to perform cell evaluation within PTW in every 2 eDRX cycles).

For example, an embodiment of the present disclosure provides an RRM measurement method, which may include the following.

For RRC-INACTIVE UE, when eDRX=20.48s and DRX=0.32s, UE is allowed to perform cell evaluation either within PTW or outside PTW in every 2 eDRX cycles (For RRC-INACTIVE UE, when eDRX=20.48s and DRX=0.32s, UE is allowed to perform cell evaluation within PTW and outside PTW in every 2 eDRX cycles).
or:
For RRC-INACTIVE UE, when eDRX=20.48s and DRX=0.32s, UE is allowed to perform cell evaluation in every 2 eDRX cycles.
or:
For RRC-INACTIVE UE, when eDRX=20.48s and DRX=0.32s, UE is allowed to perform cell evaluation within PTW in every 2 eDRX cycles. When eDRX=20.48s and RAN paging cycle for PTW = 0.32s, UE is allowed to perform cell evaluation outside PTW in every 2 eDRX cycles. (For RRC-INACTIVE UE, when eDRX=20.48s and DRX=0.32s within PTW, UE is allowed to perform cell evaluation within PTW in every 2 eDRX cycles. When eDRX=20.48s and DRX for RAN paging=0.32s outside PTW, UE is allowed to perform cell evaluation outside PTW in every 2 eDRX cycles).
or:
For RRC-INACTIVE UE, when eDRX=20.48s and DRX=0.32s, UE is allowed to perform cell evaluation within PTW in every 2 eDRX cycles. In addition, for an RRC-INACTIVE UE, UE is allowed not to perform cell evaluation outside PTW.

The following table describes in detail the measurement parameters involved in the RRM measurement of the terminal. The measurement parameters may include: the detection cycle, measurement cycle and evaluation cycle when performing relaxed RRM measurement on the serving cell, the intra-frequency neighboring cell, the inter-frequency neighboring cell and/or the inter-system cell.

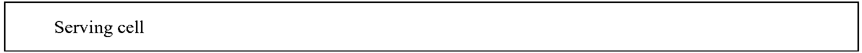

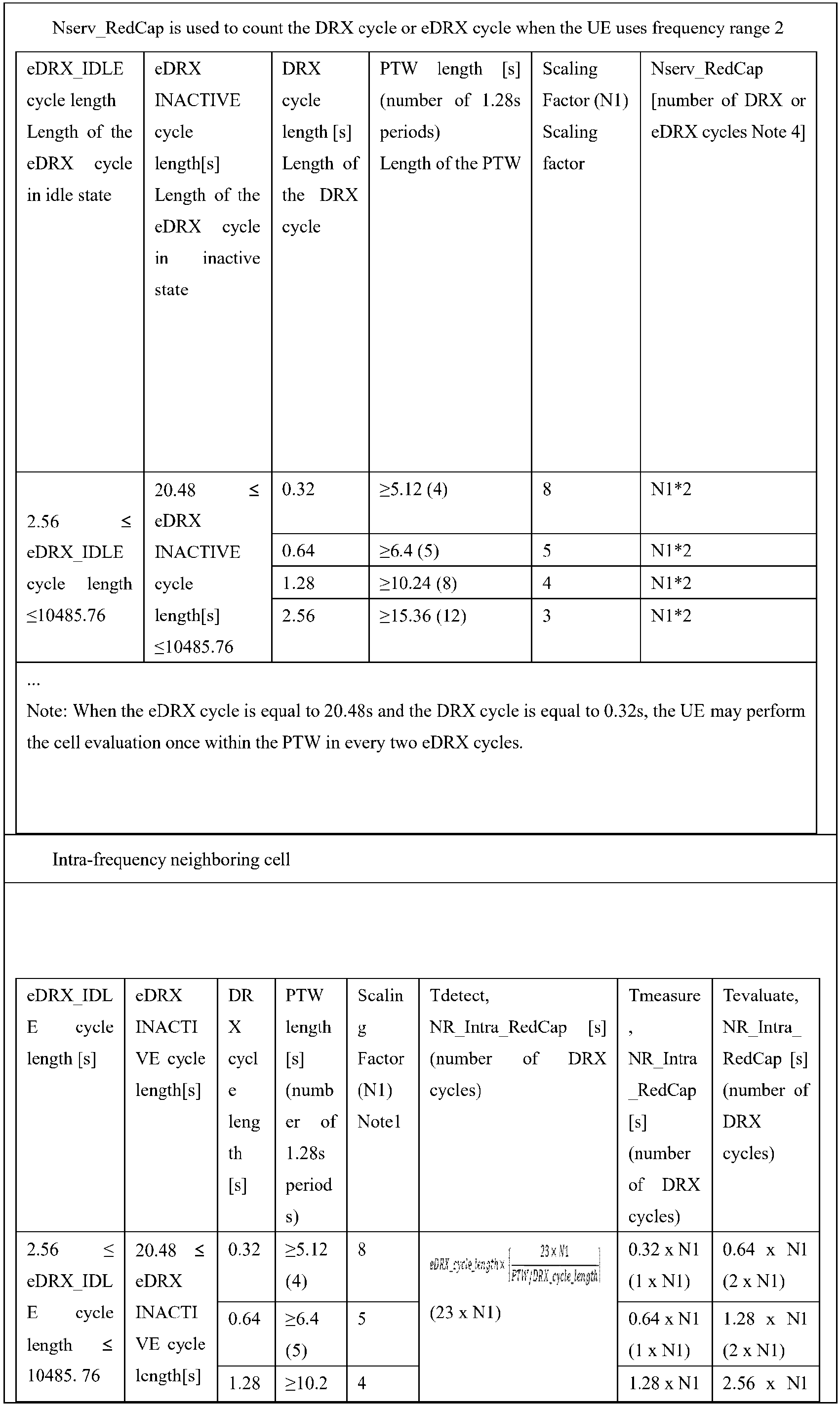

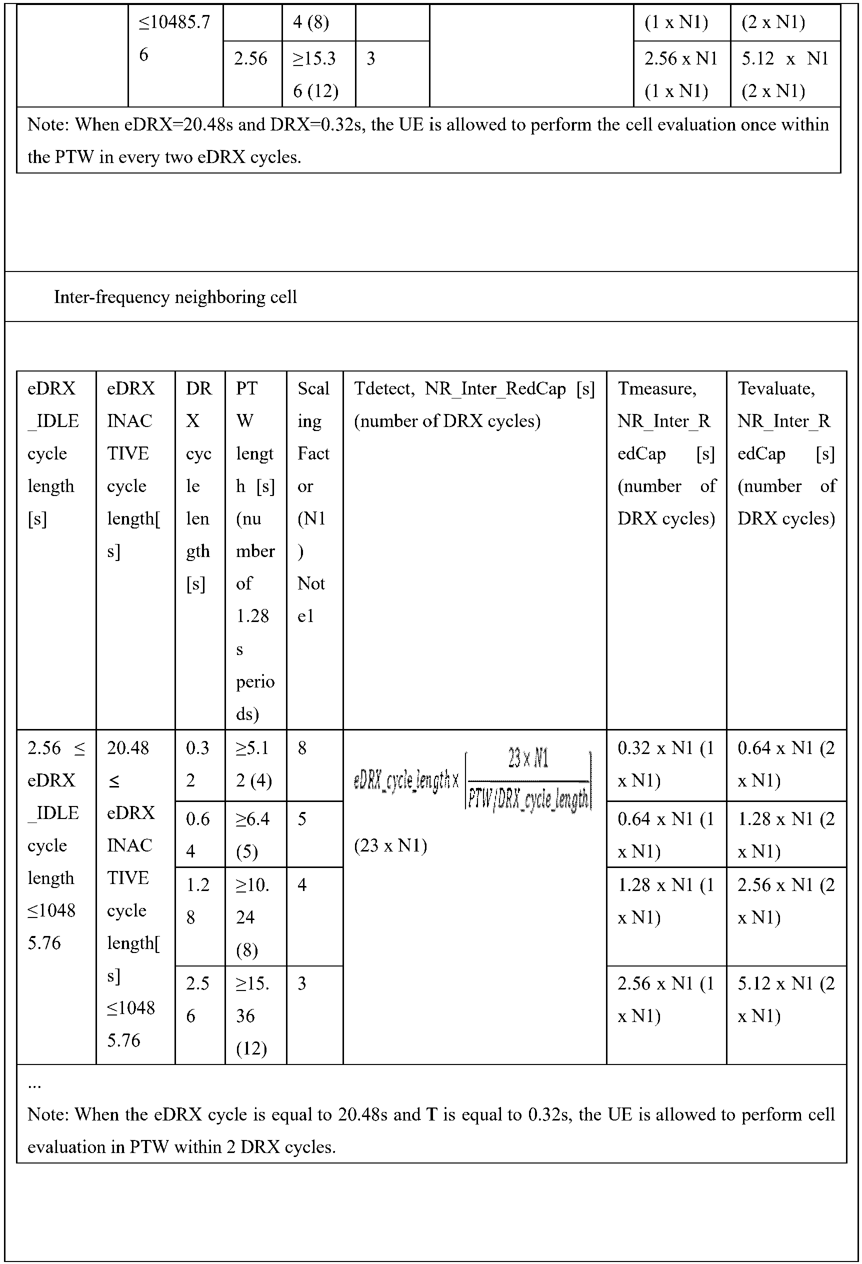

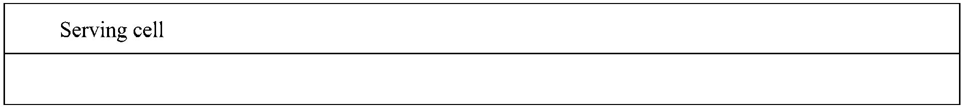

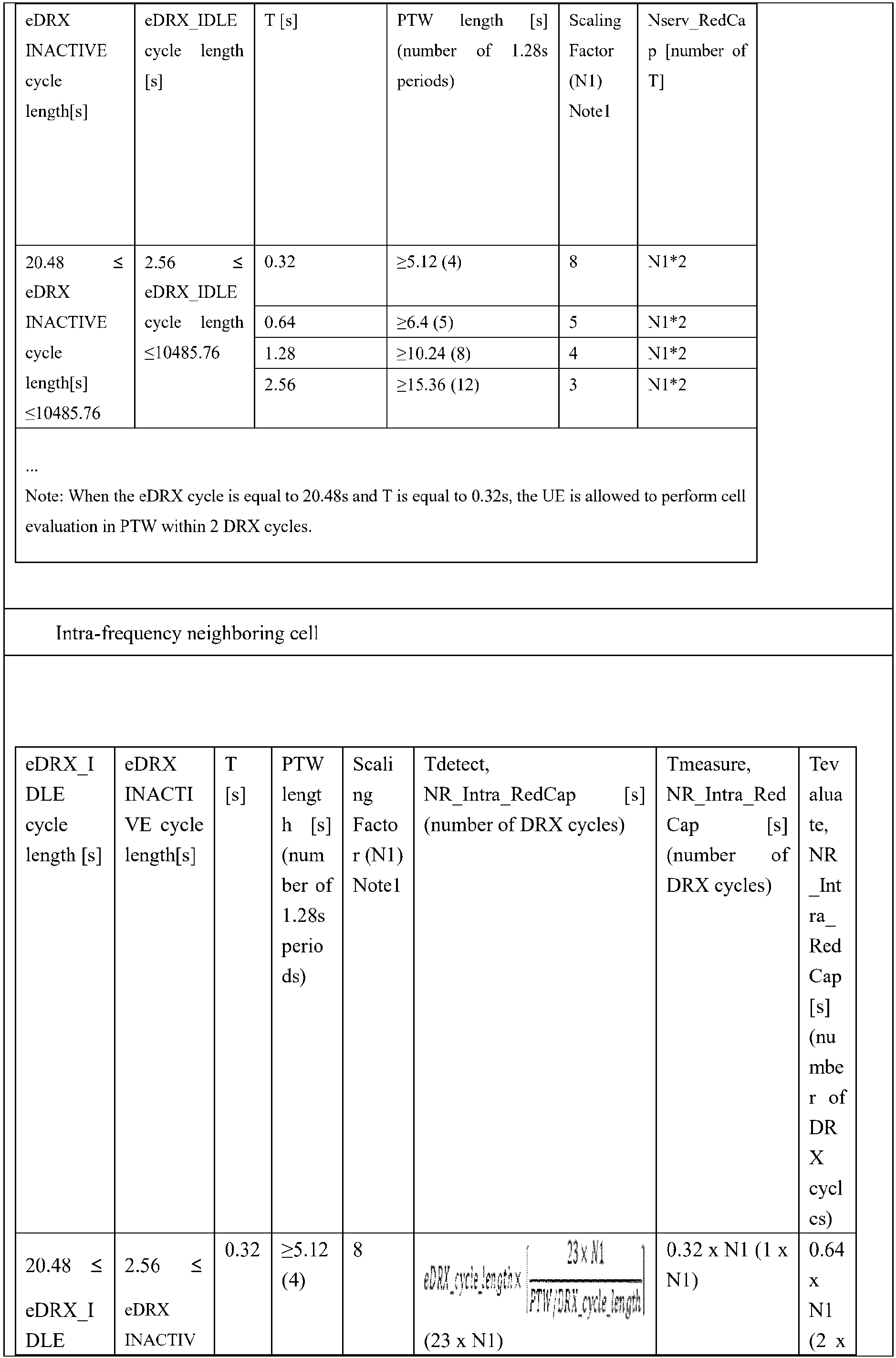

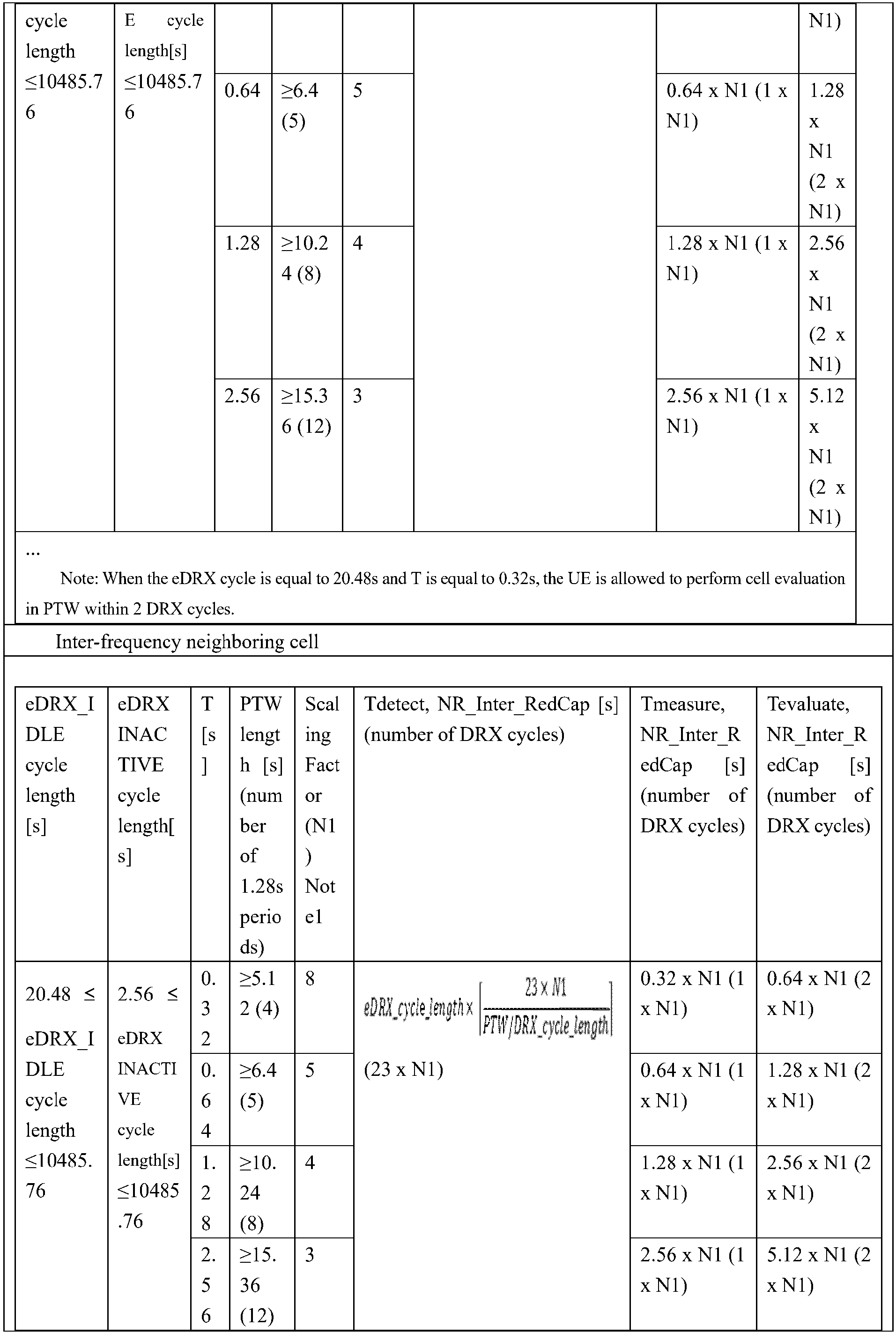

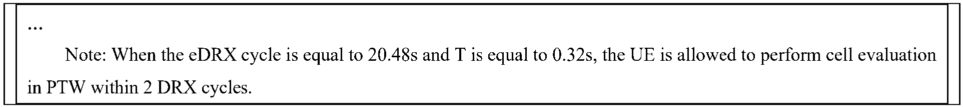

It is worth noting that the contents of each row and/or column in the above table may be implemented separately or in any combination without conflict.

In the above table, Nserv means that it functions similarly to a counter. If the UE evaluates that the serving cell does not meet the S criterion within Nserv consecutive DRX cycles, the UE will start the measurement on all neighboring cells indicated by the serving cell regardless of the current rules restricting UE measurement activities.

Tdetect means detection cycle.

Tmeasure means measurement cycle.

Tevaluate means evaluation cycle.

### Mode 2:

In idle mode, when eDRX is configured with an eDRX cycle of 20.48s and a DRX cycle of 0.32s, the UE needs to wake up more times compared with the case where DRX is not configured. In this case, eDRX does not bring additional benefits. Therefore, when the eDRX cycle is 20.48s and the DRX cycle is 0.32s, measurement within the PTW is performed once every two eDRX cycles.

In the related art, the RRM measurement requirements for the inactive mode eDRX cycle require not only measurement in the PTW, but also measurement outside the PTW. If the terminal in the inactive mode is also processed in this way, it leads to significant power consumption. Therefore, improvement is needed.

For the UE in RRC inactive mode, in a scenario where the eDRX threshold is the first threshold and/or the first DRX threshold is the second threshold, the UE performs RRM measurement according to a default cycle.

For the UE in RRC inactive mode, the eDRX thereof may be either the first eDRX cycle in idle mode configured by the network or the second eDRX cycle configured by the RAN.

As an embodiment, the first threshold is 20.48s.

For the UE in RRC inactive mode, the DRX threshold may be the monitoring cycle T in the PTW which is the aforementioned cycle for performing RRM measurement, that is, the reference cycle.

As an embodiment, the second threshold is 0.32s.

As an embodiment, the monitoring cycle T in the PTW is min {UE-specific DRX cycle, RAN paging cycle, default paging cycle}. The UE-specific DRX cycle is the aforementioned second DRX cycle. The RAN paging cycle is the aforementioned first DRX cycle. The monitoring cycle T may be the aforementioned reference cycle.

For the UE in RRC inactive mode, the DRX threshold may be the monitoring cycle T outside the PTW.

As an embodiment, the monitoring cycle T outside the PTW may be the RAN paging cycle. For the UE in RRC inactive mode, when the first eDRX threshold is the first threshold and/or the DRX threshold is the second threshold, the UE performs measurement according to the default cycle; where the default cycle is a protocol agreement or a network notification. As an embodiment, the default cycle is to perform measurement once during every two eDRX cycles.

For the UE in RRC inactive mode, in a scenario where the first eDRX threshold is the first threshold and/or the second DRX threshold is the second threshold, the UE performing measurement according to the default cycle may take effect within the PTW and/or outside the PTW.

It should be noted that when the UE performs RRM measurement, the measurement on the serving cell and the neighboring cell may be based on the same measurement requirement, that is, the UE determines the measurement parameters for both the serving cell and the neighboring cells using either mode 1 or mode 2 to. Optionally, when the UE performs RRM measurement, that is, the measurement on the serving cell and the neighboring cell performed by the UE may also be based on different measurement requirements. For example, the UE uses mode 1 to determine the measurement parameters for the serving cell, and uses mode 2 to determine the measurement parameters for the neighboring cell. Alternatively, the UE uses mode 2 to determine the measurement parameters for the serving cell, and uses mode 1 to determine the measurement parameters for the neighboring cell. Alternatively, the UE uses mode 1 or mode 2 to determine the measurement parameters for the serving cell, and uses other methods to determine the measurement parameters for the neighboring cell. Alternatively, the UE uses mode 1 or mode 2 to determine the measurement parameters for the neighboring cell, and uses other methods to determine the measurement parameters for the serving cell.

As shown in FIG. 3, an embodiment of the present disclosure provides a radio resource management (RRM) measurement apparatus, where the apparatus includes:

an execution module 110, configured to perform RRM measurement relaxation in response to an eDRX cycle being longer than or equal to a first threshold and/or a DRX cycle being shorter than or equal to a second threshold.

The RRM measurement apparatus may correspond to a terminal. The terminal may further include a storage module, at least for storing the first threshold and the second threshold, to facilitate subsequent determination of whether the relaxation condition of the RRM measurement is met according to the eDRX cycle and the DRX cycle, and to perform RRM measurement relaxation when the relaxation condition is met. In some embodiments, the execution module 110 may include various processors that can be used for information processing. The processor may be a programmable module or a dedicated integrated circuit, etc.

In other embodiments, the execution module 110 may also be a program module, which can implement the above operations after being executed by a processor.

It can be understood that the execution module 110 is configured to perform the RRM measurement relaxation in response to a first eDRX cycle being longer than or equal to the first threshold and/or a first DRX cycle being shorter than or equal to the second threshold; where the first eDRX cycle and the first DRX cycle are configured by a RAN;
and/or,
perform the RRM measurement relaxation in response to a second eDRX cycle being longer than or equal to the first threshold, and/or a second DRX cycle being shorter than or equal to the second threshold; where the second eDRX cycle and the second DRX cycle are configured by a CN.

It can be understood that the apparatus further includes:
a first measurement module, configured to perform an RRM measurement within a PTW.

It can be understood that the device further includes:
a second measurement module, configured to perform an RRM measurement within one PTW during N eDRX cycles;
where N is a positive integer longer than or equal to 2.

It can be understood that the apparatus further includes:
a first determining module, configured to determine a reference cycle for performing an RRM measurement according to at least one of a first DRX cycle, a second DRX cycle and a default paging cycle; where the second DRX cycle is configured by a CN; and
a second determining module, configured to determine a measurement parameter of the RRM measurement according to the reference cycle.

It can be understood that the first determining module is configured to determine a shorter one of any two of the first DRX cycle, the second DRX cycle, and the default paging cycle, or a shortest one among the first DRX cycle, the second DRX cycle, and the default paging cycle, as the reference cycle.

It can be understood that the first threshold is 20.48s; the second threshold is 2.56s.

An embodiment of the present disclosure provides a communication device, including:
a memory for storing processor-executable instructions; and
processors, each connected to the memory;
where the processor is configured to execute the RRM measurement method provided by any of the aforementioned technical solutions.

The processor may include various types of storage media, which are non-transitory computer storage media that can continue to retain information stored thereon after the communication device loses power.

Here, the communication device includes: a terminal.

The processor may be connected to the memory via a bus or the like, and may be used to read an executable program stored in the memory, for example, at least one of the methods shown in FIG. 1C, and FIGS. 2A to 2F.

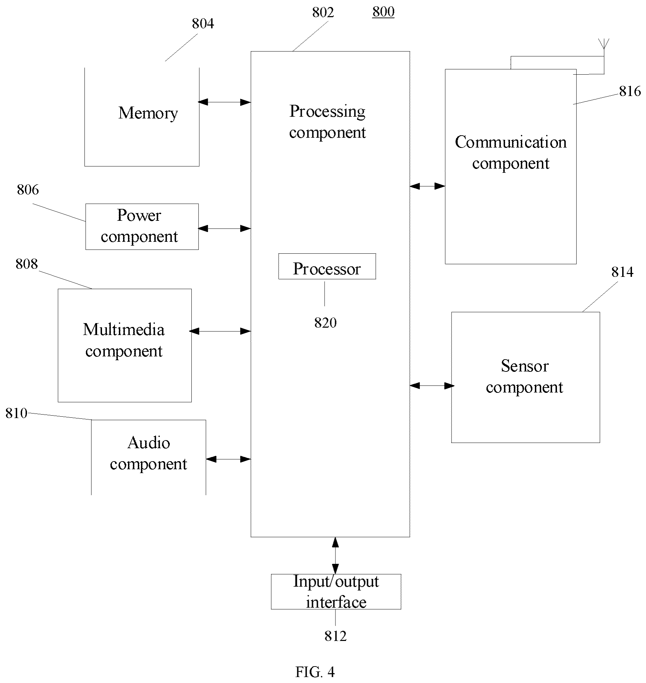

FIG. 4 is a block diagram of a terminal 800 according to an exemplary embodiment. For example, the terminal 800 may be a mobile phone, a computer, a digital broadcast user equipment, a messaging device, a gaming console, a tablet device, a medical device, a fitness device, a personal digital assistant, and the like.

Referring to FIG. 4, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone calls, data communications, camera operations, and recording operations. The processing component 802 may include one or more processors 820 to execute instructions to generate all or part of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also detect a period of time and a pressure associated with the touch or swipe action. In some embodiments, the multimedia component 808 includes a front camera and/or a rear camera. The front camera and the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the device 800, relative positioning of components, e.g., the display and the keypad, of the terminal 800, a change in location of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal 800 and other devices. The terminal 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identifier (RFID) technology, an infrared data association (IrDA) technology, an ultra-wideband (UWB) technology, a Bluetooth (BT) technology, and other technologies.

In exemplary embodiments, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, a non-transitory computer-readable storage medium including instructions is further provided, for example, a memory 804 including instructions, and the instructions can be executed by the processor 820 of the terminal 800 to generate the above RRM measurement method. For example, at least one of the methods shown in FIG. 1C, and FIGS. 2A to 2F can be performed.

For example, the non-transitory computer-readable storage medium may be a ROM, a random access memory (RAM), a CD-ROM, a magnetic tape, a floppy disk, an optical data storage device, and the like.

Other embodiments of the present disclosure will be apparent to those skilled in the art from consideration of the specification and practice of the contents disclosed here. The present disclosure is intended to cover any variations, uses, or adaptations of the embodiments of the present disclo sure, which follows the general principles thereof and includes the common knowledge or habitual technical means in this technical field that is not disclosed in the present disclosure. The specification and embodiments are considered as exemplary only, with a true scope and spirit of the embodiments of the present disclosure being indicated by the following claims.

It should be understood that the embodiments of the present disclosure are not limited to the precise construction that has been described above and illustrated in the accompanying drawings, and various modifications and changes can be made without departing from the scope thereof. The scope of the embodiments of the present disclosure is only limited by the appended claims.

## Claims

1. A radio resource management (RRM) measurement method, performed by a terminal, comprising:
in response to an extended discontinuous reception (eDRX) cycle being longer than or equal to a first threshold, and/or a discontinuous reception (DRX) cycle being shorter than or equal to a second threshold, performing RRM measurement relaxation.

2. The method according to claim 1, wherein in response to the extended discontinuous reception (eDRX) cycle being longer than or equal to the first threshold and/or the discontinuous reception (DRX) cycle being shorter than or equal to the second threshold, performing the RRM measurement relaxation, comprises:
in response to a first eDRX cycle being longer than or equal to the first threshold, and/or a first DRX cycle being shorter than or equal to the second threshold, performing the RRM measurement relaxation; wherein the first eDRX cycle and the first DRX cycle are configured by an access network (RAN);
or,
in response to a second eDRX cycle being longer than or equal to the first threshold, and/or a second DRX cycle being shorter than or equal to the second threshold, performing the RRM measurement relaxation; wherein the second eDRX cycle and the second DRX cycle are configured by a core network (CN).

3. The method according to claim 1 or 2, further comprising:
performing an RRM measurement within a paging time window (PTW).

4. The method according to any one of claims 1 to 3, further comprising:
performing an RRM measurement within one PTW during N eDRX cycles;
wherein N is a positive integer longer than or equal to 2.

5. The method according to any one of claims 1 to 4, further comprising:
determining a reference cycle according to at least one of a first DRX cycle, a second DRX cycle and a default paging cycle; wherein the first DRX cycle is configured by a RAN, and the second DRX cycle is configured by a CN; and
determining a measurement parameter of an RRM measurement according to the reference cycle.

6. The method according to claim 5, wherein determining the reference cycle for performing the RRM measurement according to at least one of the first DRX cycle, the second DRX cycle, and the default paging cycle, comprises:
determining a shorter one of any two of the first DRX cycle, the second DRX cycle, and the default paging cycle, or a shortest one among the first DRX cycle, the second DRX cycle, and the default paging cycle, as the reference cycle.

7. The method according to any one of claims 1 to 6, wherein the first threshold is 20.48s, and/or the second threshold is 2.56s.

8. A radio resource management (RRM) measurement apparatus, comprising:
an execution module, configured to perform RRM measurement relaxation in response to an extended discontinuous reception (eDRX) cycle being longer than or equal to a first threshold and/or a discontinuous reception (DRX) cycle being shorter than or equal to a second threshold.

9. The apparatus according to claim 8, wherein the execution module is configured to perform the RRM measurement relaxation in response to a first eDRX cycle being longer than or equal to the first threshold and/or a first DRX cycle being shorter than or equal to the second threshold; wherein the first eDRX cycle and the first DRX cycle are configured by an access network (RAN);
and/or,
perform the RRM measurement relaxation in response to a second eDRX cycle being longer than or equal to the first threshold, and/or a second DRX cycle being shorter than or equal to the second threshold; wherein the second eDRX cycle and the second DRX cycle are configured by a core network (CN).

10. The apparatus according to claim 8 or 9, further comprising:
a first measurement module, configured to perform an RRM measurement within a paging time window (PTW).

11. The apparatus according to any one of claims 8 to 10, further comprising:
a second measurement module, configured to
perform an RRM measurement within one PTW during N eDRX cycles;
wherein N is a positive integer longer than or equal to 2.

12. The apparatus according to any one of claims 8 to 11, further comprising:
a first determining module, configured to determine a reference cycle for performing an RRM measurement according to any one of a first DRX cycle, a second DRX cycle and a default paging cycle; wherein the first DRX cycle is configured by a RAN, and the second DRX cycle is configured by a CN; and
a second determining module, configured to determine a measurement parameter of the RRM measurement according to the reference cycle.

13. The apparatus according to claim 12, wherein the first determining module is configured to determine a shorter one of any two of the first DRX cycle, the second DRX cycle, and the default paging cycle, or a shortest one among the first DRX cycle, the second DRX cycle, and the default paging cycle, as the reference cycle.

14. The apparatus according to any one of claims 8 to 13, wherein the first threshold is 20.48s; and the second threshold is 2.56s.

15. A communication device, comprising a processor, a transceiver, a memory, and an executable program stored in the memory and capable of being run by the processor, wherein the processor, when running the executable program, executes the method according to any one of claims 1 to 7.

16. A computer storage medium, wherein the computer storage medium stores an executable program; wherein the executable program, when executed by a processor, implements the method according to any one of claims 1 to 12.
